# EUROPEAN PATENT APPLICATION

(11) **EP 4 236 448 A1**
(43) Date of publication of application: **30.08.2023**
(21) Application number: 20958028.1
(22) Date of filing: 20.10.2020
(51) Int. Cl.: H04W 36/00

(54) **FREQUENCY PRIORITY DETERMINATION METHOD AND APPARATUS, INFORMATION ISSUING METHOD AND APPARATUS, AND DEVICE AND MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Gunzelmann, Rainer
(86) International application number: PCT/CN2020/122243
(87) International publication number: WO 2022/082445

(57) **Abstract**

Provided are a frequency priority determination method and apparatus, an information issuing method and apparatus, and a communication device and a storage medium. The frequency priority determination method comprises: receiving base station signaling, wherein the base station signaling comprises frequency information of a preferred frequency of a network slice; and according to the frequency information of the preferred frequency, determining a frequency priority for cell reselection.

## Description

### TECHNICAL FIELD

The disclosure relates to, but is not limited to, a field of wireless communication technology, in particular to a method and an apparatus for determining a frequency priority for a cell reselection, a method and an apparatus for sending information, a communication device and a storage medium.

### BACKGROUND

Cell reselection refers to a mechanism where user equipment (UE) residing in one cell can by connected to a cell that is more suitable for a current communication scenario and wireless environment.

Before the UE performs the cell reselection, a component in the network first sorts frequency priorities for the frequencies used by respective cells. The network component sends a sorting result of the frequency priorities to the UE. The UE selects a suitable cell with the highest frequency priority and the highest signal quality as a target cell for the cell reselection according to the sorting result of the frequency priorities.

The UE then accesses the target cell.

### SUMMARY

Embodiments of the disclosure provide a method and an apparatus for determining a frequency priority for a cell reselection, a method and an apparatus for sending information, a communication device and a storage medium.

According to a first aspect of embodiments of the disclosure, a method for determining a frequency priority for a cell reselection is provided. The method is applied to user equipment and includes:
receiving a base station signaling, in which the base station signaling includes: frequency information of a preferred frequency of a network slice; and
determining the frequency priority for the cell reselection based on the frequency information of the preferred frequency.

According to a second aspect of embodiments of the disclosure, a method for sending information is provided. The method is applied to a station and includes:
sending a base station signaling, in which the base station signaling includes: frequency information of a preferred frequency of a network slice; and the frequency information of the preferred frequency is used for the UE to determine a frequency priority for a cell reselection.

According to a third aspect of embodiments of the disclosure, an apparatus for determining a frequency priority for a cell reselection is provided. The method is applied to user equipment and includes:
a receiving module, configured to receive a base station signaling, in which the base station signaling includes: frequency information of a preferred frequency of a network slice; and
a first determining module, configured to determine the frequency priority for the cell reselection based on the frequency information of the preferred frequency.

According to a fourth aspect of embodiments of the disclosure, an apparatus for sending information is provided. The apparatus is applied to a base station and includes:
a sending module, configured send a base station signaling, in which the base station signaling includes: frequency information of a preferred frequency of a network slice; and the frequency information of the preferred frequency is used for the UE to determine a frequency priority for a cell reselection.

According to a fifth aspect of embodiments of the disclosure, a communication device is provided. The communication device includes: a processor, a transceiver, a memory, and an executable program stored on the memory and capable of being run by the processor. When the processor executes the executable program, the method according to any of the first aspect or the second aspect is performed.

According to a sixth aspect of the disclosure, a computer storage medium storing an executable program is provided. When the executable program is executed by a processor, the method according to any of the first aspect or the second aspect is performed.

According to the technical solutions provided by the embodiments of the disclosure, the UE may receive the base station signaling sent by the base station, and determine the frequency priority for the cell reselection according to the frequency information of the preferred frequency of the network slice carried in the base station signaling. In this way, when determining the frequency priority for the cell reselection, the preferred frequency of the network slice is introduced, so that the UE has a higher probability of reselecting to a cell corresponding to the preferred frequency of the network slice that is expected to be accessed, thereby successfully obtaining a slicing service of the network slice or obtaining a higher-quality slicing service of the network slice.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of the specification, illustrate embodiments consistent with the disclosure and serve to explain the principles of the disclosure together with the description.
FIG. 1 is a schematic diagram of a wireless communication system according to an embodiment.
FIG. 2 is a flowchart of a method for determining a frequency priority for a cell reselection according to an embodiment.
FIG. 3 is a flowchart of a method for sending information according to an embodiment.
FIG. 4 is a block diagram of an apparatus for determining a frequency priority for a cell reselection according to an embodiment.
FIG. 5 is a block diagram of an apparatus for sending information according to an embodiment.
FIG. 6 is a block diagram of UE according to an embodiment.
FIG. 7 is a block diagram of a base station according to an embodiment.

### DETAILED DESCRIPTION

Reference will now be made in detail to exemplary embodiments, examples of which are illustrated in the accompanying drawings. The following description refers to the accompanying drawings in which the same or similar numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the embodiments of the disclosure are only for the purpose of describing particular embodiments, but should not be construed to limit the embodiments of the disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It should be further understood that, although terms such as "first", "second" and "third" are used herein for describing various elements, these elements should not be limited by these terms. These terms are only used for distinguishing one element from another element. For example, first information may also be called second information, and similarly, the second information may also be called the first information, without departing from the scope of the present disclosure. As used herein, the term "if" may be construed to mean "when" or "upon" or "in response to determining" or "in accordance with a determination" or "in response to detecting," that a stated condition precedent is true, depending on the context.

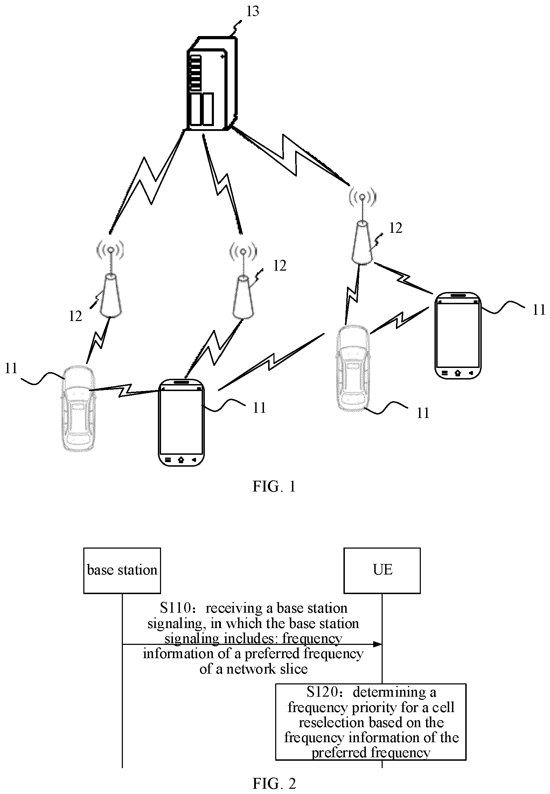

With reference to FIG. 1, FIG. 1 is a schematic diagram illustrating a wireless communication system according to an embodiment. As illustrated in FIG. 1, the wireless communication system is a communication system based on the cellular mobile communication technology. The wireless communication system may include several UEs 11 and several base stations 12.

The UE 11 may be a device that provides voice and/or data connectivity to a user. The UE 11 can communicate with one or more core networks via a radio access network (RAN). The UE 11 can be an IoT terminal, such as a sensor device, a mobile phone (or a cellular phone), and a computer having an IoT terminal, for example, a fixed, portable, pocket-sized, handheld, built-in computer or vehicle-mounted device, such as, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle. Alternatively, the terminal 11 may also be an in-vehicle device, for example, the UE 11 may be a vehicle-mounted computer with a wireless communication function, or a wireless communication device externally connected to a vehicle-mounted computer. Alternatively, the UE 11 may also be a roadside device, for example, a road light with a wireless communication function, a traffic light or other roadside devices and so on.

The base station 12 may be a network side device in the wireless communication system. The wireless communication system may be a 4^{th} generation mobile communication (4G) system, also known as the long term evolution (LTE) system. Alternatively, the wireless communication system may also be a 5G system, also known as the new radio (NR) system. Alternatively, the wireless communication system may also be a next-generation system of the 5G system. An access network in the 5G system may be called as a new generation radio access network (NG-RAN), or a machine-type communication (MTC) system.

The base station 12 may be an evolved base station (eNB) adopted in the 4G system. Alternatively, the base station 12 may also be a base station (gNB) adopting a centralized and distributed architecture in the 5G system. When the base station 12 adopts the centralized distributed architecture, it generally includes a central unit (CU) and at least two distributed units (Dus). The CU is provided with a protocol stack including a packet data convergence protocol (PDCP) layer, a radio link control (RLC) layer, and a media access control (MAC) layer. The DU is provided with a protocol stack including a physical (PHY) layer, and the embodiment of the disclosure does not limit the specific implementation manner of the base station 12.

A wireless connection can be established between the base station 12 and the UE 11 through a wireless air interface. In different embodiments, the wireless air interface is a wireless air interface based on the 4G standard. Alternatively, the wireless air interface is a wireless air interface based on the 5G standard. For example, the wireless air interface is the NR. Alternatively, the wireless air interface can also be a wireless air interface based on a standard of next generation mobile communication network technology based on the 5G.

In some embodiments, an end to end (E2E) connection can be established between the UE 11, for example a vehicle to vehicle (V2V) communication, a vehicle to infrastructure (V2I) communication, vehicle to pedestrian (V2P) communication and other scenarios in the vehicle to everything (V2X) communication.

Alternatively, the wireless communication system may further include a network management device 13.

A plurality of the base stations 12 are connected to the network management device 13 respectively. The network management device 13 may be a core network device in the wireless communication system. For example, the network management device 13 may be a mobility management entity (MME) of an evolved packet core (EPC) network. Alternatively, the network management device may also be other core network devices, such as a serving gateway (SGW), a public data network gateway (PGW), and a policy and charging rules function (PCRF) unit or a home subscriber server (HSS). The implementation form of the network management device 13 is not limited in the embodiment of the disclosure.

As illustrated in FIG. 2, the embodiment of the present disclosure provides a method for determining a frequency priority for a cell reselection. The method is applied to user equipment UE and includes the following.

At S110, a base station signaling is received, in which the base station signaling includes: frequency information of a preferred frequency of a network slice.

At S 120, a frequency priority for a cell reselection is determined based on the frequency information of the preferred frequency.

In an embodiment, the UE may be any type of terminal, including but not limited to: a mobile phone, a tablet computer, a wearable device, an industrial device, a vehicle-mounted device, or a smart device.

The smart device includes but is not limited to: a smart home appliance and/or a smart office device.

The smart home appliance includes but is not limited to: a smart cleaning device such as a sweeping robot, a smart water meter, a smart electricity meter, a smart window, and/or a smart refrigerator, and the like.

The smart office device includes but is not limited to: a smart printer and/or a smart fax machine, and the like.

The base station signaling may be any signaling sent by a base station.

The frequency information may include priority information of a frequency priority.

In an embodiment, the frequency information further includes a frequency identification and priority information corresponding to the frequency identification. The frequency identification is configured to indicate a corresponding frequency. The frequency identification may be a frequency index.

The preferred frequency is a frequency preferentially used by the UE to access a corresponding network slice.

In an embodiment, the frequency information further includes: a frequency value and priority information corresponding to a frequency corresponding to the frequency value.

In an embodiment, the frequency information may not include a frequency priority, but include a frequency value or a frequency identification of the preferred frequency of the network slice. The frequency information is equivalent to indicating the preferred frequency of the network slice. In this way, when the UE subsequently performs the cell reselection, it will determine the preferred frequency of the network slice according to the frequency information, and further determine that the preferred frequency has a higher frequency priority than a non-preferred frequency. The non-preferred frequency may be any frequency other than the preferred frequency.

For example, the UE searches for frequencies F1 and F2, the UE accesses a network slice 1, if the preferred frequency of the network slice 1 is F 1, and F2 is the non-preferred frequency of the network slice 1. Here, the non-preferred frequency can be: any frequency other than the preferred frequency. If the UE selects a cell corresponding to F1, after accessing the network slice 1, the UE can successfully obtain the slice service provided by the network slice 1 or obtain the slice service of higher quality.

The preferred frequency of the network slice is associated with a network resource corresponding to the network slice. For example, the network slice includes a radio access network (RAN) slice. The radio access network slice may correspond to part of physical resources of the RAN, and if the part of physical resources works at F 1, F1 is the preferred frequency of the network slice. The preferred frequency is a subdivision type of communication frequency in the wireless communication. For another example, some physical resources of the RAN corresponding to the network slice can work at both F1 and F2, but the amount of physical resources working at F2 is very small. In this case, F1 can be considered as the preferred frequency of the network slice, while F2 may not be considered the preferred frequency of the network slice. Of course, this is only an example illustration about the network slice and the preferred frequency of the network slice, and the specific implementation is not limited to this.

In another embodiment, the frequency information may be priority information sent according to the sorting of frequencies. In this way, the frequency to which the frequency priority indicated by the priority information belongs may be determined according to the sorting of the priority information.

In an embodiment, the network side is configured with multiple network slices, some network slices are expected to be accessed by the UE, and some network slices are not expected to be accessed by the UE. The expected network slice is a network slice that the UE expects to access.

In an embodiment, block S120 may include the following.

According to the frequency information of the preferred frequencies of the expected network slices that the UE expects to access, the frequency priorities of the preferred frequencies of the expected network slices that the UE expects to access are sorted to obtain a frequency priority sorting result. That is, when the frequency priorities are sorted for the cell reselection, only the frequency priority of the preferred frequency of the expected network slice that the UE expects to access needs to be specially treated.

Further, the method further includes:
according to the frequency priority sorting result, selecting one or more candidate cells with the highest frequency priority;
combined with a signal quality of each candidate cell, determining a target cell for the cell reselection; and
after accessing the target cell for the cell reselection, completing a reselection of the target cell.

In the embodiment of the disclosure, when determining the frequency priority for the cell reselection of the UE, the frequency priority is determined by considering the preferred frequency of the expected network slice that the UE expects to access. In this way, the cell corresponding to the preferred frequency of the expected network slice can be fully considered during the cell reselection, so that the UE performing the cell reselection can successfully obtain the slice service provided by the expected network slice or obtain the slice service of higher quality.

In some embodiments, the base station signaling further includes: a broadcast signaling; and/or a dedicated signaling.

The broadcast signaling may include various broadcast messages that are broadcast, for example, a system message that is broadcast and the like.

The dedicated signaling may be various unicast signalings, such as, but not limited to, a unicast RRC signaling.

In the embodiment of the disclosure, the frequency information of the preferred frequency of the network slice may be carried by the broadcast signaling, or may be carried by the dedicated signaling.

In an embodiment, a signaling priority of the dedicated signaling may be higher than a signaling priority of the broadcast signaling. Since the signaling priority of the dedicated signaling is higher than that of the broadcast signaling, when the content carried by the dedicated signaling and the broadcast signaling conflict, the dedicated signaling shall prevail. In this way, if both the broadcast signaling and the dedicated signaling carry the frequency information of the preferred frequency of one network slice, the frequency information of the preferred frequency carried by the dedicated signaling shall prevail.

In an embodiment, block S120 may include:
in response to presence of a dedicated signaling including the frequency information of the preferred frequency, determining the frequency priority for the cell reselection based on the frequency information of the preferred frequency included in the dedicated signaling.

In another embodiment, block S120 may include:
in response to presence of a dedicated signaling including the frequency information of the preferred frequency, determining the frequency priority for the cell reselection based on the frequency information of the preferred frequency included in the dedicated signaling and an expected network slice that the UE expects to access.

If the dedicated signaling carries the frequency information of the preferred frequency of the network slice, the frequency priority of the preferred frequency of the network slice is determined according to the frequency information, and then according to the determined frequency priority of the preferred frequency of the network slice, the sorting of frequency priorities for the cell reselection is performed.

In response to presence of a dedicated signaling including the frequency information of the preferred frequency, two cases may be described as follows.

Case 1, a dedicated signaling only including the frequency information of the preferred frequency exists.

Case 2, a dedicated signaling including both the frequency information of the preferred frequency and a dedicated priority exists.

Regardless of the dedicated signaling described in Case 1 or Case 2, the frequency priority for the cell reselection is determined based on the frequency information of the preferred frequency included in the dedicated signaling.

If a dedicated signaling including both the frequency information of the preferred frequency and the dedicated priority, for the frequency information of the preferred frequency and the dedicated priority carried by the same dedicated signaling, the frequency priority of the preferred frequency is higher than that of the dedicated frequency. That is, in this case, block S 120 may include: in response to presence of a dedicated signaling including the preferred frequency and the dedicated priority, determining the frequency priority for the cell reselection according to the frequency information of the preferred frequency and the dedicated priority included in the dedicated signaling. And when the sorting of frequency priorities is performed, the frequency priority of the preferred frequency is higher than the dedicated priority.

In an embodiment, block S120 may include:
in response to presence of a dedicated signaling including the frequency information of the preferred frequency and the dedicated priority, determining the frequency priority for the cell reselection based on the frequency information of the preferred frequency and the dedicated priority included in the dedicated signaling in combination with an expected network slice that the UE expects to access. And when the sorting of frequency priorities is performed, the frequency priority of the preferred frequency is higher than the dedicated priority.

In an embodiment, the method may further include:
in response to absence of a dedicated signaling including the frequency information of the preferred frequency and presence of a dedicated signaling including the dedicated priority, determining the frequency priority for the cell reselection based on the dedicated priority included in the dedicated signaling.

In an embodiment, if only a dedicated signaling including the dedicated priority exists, the frequency priority for the cell reselection is determined according to the dedicated priority carried in the dedicated signaling.

In an embodiment, if the dedicated signaling includes the frequency information of the preferred frequency and the dedicated priority, the preferred frequency has a higher frequency priority than the dedicated priority.

If at least one dedicated signaling including both the preferred frequency and the dedicated priority exists, the preferred frequency has a higher frequency priority than the dedicated priority, thus ensuring that the UE preferentially reselect the cell corresponding to preferred frequency of the expected network slice that the UE expects to access.

In some embodiments, the dedicated signaling further includes:
area information, configured to indicate an effective area where the frequency information of the preferred frequency and/or the dedicated priority included in the dedicated signaling is effective.

If the UE is located in the effective area, the frequency information of the preferred frequency and/or the dedicated priority included in the dedicated signaling is used to determine the frequency priority for the cell reselection.

The area information may be any identification information indicating the effective area, for example, an area number of the effective area or coordinate information of a center point of the effective area. In summary, the area information may be any information indicating an area where the frequency information included in the dedicated signaling is effective.

It should be noted that,
objects at which the effective area indicated by the effective area is targeted include:
the frequency information of the preferred frequencies carried by the dedicated signaling alone;
the dedicated priority carried by the dedicated signaling alone;
both the frequency information of the preferred frequencies and the dedicated priority carried by the dedicated signaling.

If the UE is located in the effective area, the frequency information at which the effective area is targeted in the dedicated signaling is effective; if the UE is located outside the effective area, the frequency information at which the effective area is targeted in the dedicated signaling is ineffective.

If the UE is located in the effective area, the dedicated priority at which the effective area is targeted in the dedicated signaling is effective; if the UE is located outside the effective area, the dedicated priority at which the effective area is targeted in the dedicated signaling is ineffective.

When determining the frequency priority of the cell, it is only based on the effective frequency information of the preferred frequency and/or the effective dedicated priority in the dedicated signaling.

For example, if the UE is located in the effective area, when the UE determines the frequency priority for the cell reselection, the sorting of frequency priorities for the cell reselection is performed according to the frequency information of the preferred frequency and/or the dedicated priority carried by the dedicated signaling. If the UE is located outside the effective area, when determining the frequency priority for the cell reselection, the frequency information of one or more preferred frequencies and/or the dedicated priority included in the dedicated signaling may be ignored. In this case, the frequency information of the one or more preferred frequencies and/or the dedicated priority that is ignored is the frequency information of the preferred frequency and/or the dedicated priority at which the effective area is targeted.

In an embodiment, the effective area may include at least one of:
some or all of tracking areas (Tas) in a tracking area list;
some or all of cells in a cell list;
a registration area where the UE is located.

It should be noted that, the area information can be included in any kind of dedicated signaling, for example, in the dedicated signaling that only carries the frequency information of the preferred frequency. In this case, the effective area indicated by the area information is targeted at the frequency information of the preferred frequency carried by the dedicated signaling. The area information may also be included in the dedicated signaling that only carries the dedicated priority. In this case, the effective area indicated by the area information is targeted at the dedicated priority carried by the dedicated signaling.

If a dedicated signaling carries both the frequency information of the preferred frequency and the dedicated priority and also carries the area information, the effective area indicated by the area information can be solely targeted at the frequency information of the preferred frequency, or solely targeted at the dedicated frequency information, or targeted at both the frequency information of the preferred frequency and the dedicated priority.

Of course, this is an example of the effective area, and the specific implementation can be configured as required.

In an embodiment, the frequency information and/or the dedicated priority included in the dedicated signaling is effective within a running time of a configuration timer.

The dedicated signaling includes the effective frequency information of the preferred frequency and the effective dedicated priority for determining the frequency priority for the cell reselection.

The dedicated signaling has a configuration timer, for example, the configuration timer included in dedicated signaling includes but is not limited to timer T320.

The configuration timer has a running rule. The running rule defines: start of the configuration timer, termination of the configuration timer and/or expiration of the configuration timer, etc.

For example, a running duration of the configuration timer is defined according to the running rule, and the configuration timer terminates running upon the configuration timer runs for the running duration after it is started (i.e., expires). In some cases, the configuration timer may suspend the running due to some triggering events before running to the end time.

The configuration timer being in the running time refers to that the configuration timer is in a timing range.

The triggering event for stopping the configuration timer (i.e., the running is suspended or terminated) includes but is not limited to:
a RRC state of the UE being changed, for example, the UE is changed from a RRC idle state or a RRC inactive state to a RRC connected state.

The UE performs the cell reselection between different radio access technologies (RATs).

The configuration timer terminating the running includes reaching a timing end time of the configuration timer.

The effective time of the preferred frequency and/or the dedicated priority in the dedicated signaling refers to that, within the running time of the configuration timer, if the configuration timer terminates running or has not started running, the frequency information of the preferred frequency and/or dedicated priority at which the configuration timer is targeted in the dedicated signaling ineffective. Neither the ineffective frequency information of the preferred frequency nor the ineffective dedicated priority can be used as a reference for determining the frequency priority for the cell reselection, that is, only the effective frequency information of the preferred frequency and/or the effective dedicated priority can be used for determining the frequency priority for the cell reselection.

In an embodiment, the configuration timer has an action scope.

The frequency information of the preferred frequency and/or the dedicated priority included in the dedicated signaling is ineffective when the UE is out of the action scope.

The configuration timer has the action scope. In an embodiment, the action scope may be determined by the UE itself, or determined by the running rule of the configuration timer.

In another embodiment, the action scope may be configured by the network side. Of course, the above is only an example of the manner of determining the action scope of the configuration timer, and the specific implementation is not limited to this.

The action scope of the configuration timer may include:
one or more cells; if the action scope of the configuration timer is a cell, the cell may be a cell to which timer information of the configuration timer is sent or a current cell of the UE; if the action scope of the configuration timer include multiple cells, the multiple cells may include but be not limited to a cell to which timer information of the configuration timer is sent and one or more adjacent cells;
one or more Tas; if the action scope of the configuration timer is a TA, the TA may be a TA to which timer information of the configuration timer is sent or a current TA of the UE;
a registration area (RA), a RA to which timer information of the configuration timer is sent or a current RA where the UE is located.

The timer information includes, but is not limited to, one or more of identification information of the timer, timing duration information of the timer, and a running rule of the timer.

In an embodiment, the action scope of the configuration timer is defined for the UE in the RRC idle state or the RRC inactive state.

For example, if the UE in the RRC idle state or the RRC inactive state moves out of the action scope of the configuration timer, the configuration timer terminates the running, and the frequency information at which the configured timer is targeted in the dedicated signaling is ineffective. If the UE in the RRC idle state or the RRC inactive state is located within the action scope of the configuration timer, the configuration timer runs according to the predetermined rule. In this case, if the configuration timer is running, the frequency information of the preferred frequency and/or the dedicated priority at which the configuration timer is targeted in the dedicated signaling is effective, and the effective frequency information of the preferred frequency and/or the effective dedicated priority can be used to determine the frequency priority for the cell reselection.

In an embodiment, block S120 may include:
in response to absence of a dedicated signaling and presence of a broadcast signaling including the frequency information of the preferred frequency, determining the frequency priority for the cell reselection based on the frequency information of the preferred frequency included in the broadcast signaling.

If the UE does not receive the dedicated signaling, but receives the broadcast signaling carrying the frequency information of the preferred frequency, the UE performs sorting of frequency priorities for the cell reselection according to the frequency information of the preferred frequency carried in the broadcast signaling.

In an embodiment, block S120 may specifically include:
in response to absence of a dedicated signaling and presence of a broadcast signaling including the frequency information of the preferred frequency, determining the frequency priority for the cell reselection based on the frequency information of the preferred frequency included in the broadcast signaling and an expected network slice that the UE expects to access.

In an embodiment, the method further includes:
in response to absence of a dedicated signaling and absence of a broadcast signaling including the frequency information of the preferred frequency, determining the frequency priority for the cell reselection based on a common priority included in the broadcast signaling.

Here, the common priority is a frequency priority carried by the broadcast signaling.

In an embodiment, if the UE receives a broadcast signaling that includes both the preferred frequency and the common priority, on the one hand, when determining the frequency priority for the cell reselection, the frequency priority for the cell reselection is determined based on the preferred frequency and the common priority in the broadcast signaling; on the other hand, the frequency priority of the preferred frequency in the broadcast signaling is configured to be higher than the common priority, when determining the frequency priority for the cell reselection, the frequency priority of the preferred frequency is higher than common priority.

In conclusion, in the embodiment of the disclosure, if the broadcast signaling includes the frequency information of the preferred frequency and the common priority, the common priority is lower than the frequency priority of the preferred frequency.

In an embodiment, the network slice has one or more preferred frequencies.

One network slice may be configured with one or more preferred frequencies, which is not limited herein. The number of preferred frequencies configured for one network slice may be determined based on a working frequency configuration of a resource corresponding to the network slice.

In an embodiment, if one network slice has multiple preferred frequencies, different preferred frequencies are configured with different frequency priorities. The frequency priorities of the preferred frequencies here can be configured by the network side, for example, configured by an AMF or a base station. For example, multiple preferred frequencies of a network slice have different frequency priorities.

In an embodiment, no frequency priority is configured among the preferred frequencies, and the frequency priorities among the preferred frequencies are determined by the UE itself.

If the UE has one or more network slices, and these network slices have one or more preferred frequencies, but the network side does not configure the frequency priorities of the multiple preferred frequencies of a network slice, the frequency priorities among the multiple preferred frequencies of the network slice can be determined by the UE itself.

When the UE decides the frequency priorities among the multiple preferred frequencies of a network slice by itself, the UE may decide the frequency priorities among the multiple preferred frequencies according to a policy or randomly.

In an embodiment, the base station signaling may not carry slice information. In another embodiment, the base station signaling may also carry slice information. The slice information indicates a network slice, e.g., the slice information may indicate a network slice that the UE is allowed to access and/or a network slice configured for the UE.

The expected network slice that the UE expects to access may or may not have an association relationship with the network slice indicated by the slice information.

If the expected network slice that the UE expects to access has an association relationship with the network slice indicated by the slice information, the expected network slice that the UE expects to access belongs to one of the network slices indicated by the slice information, or the UE determines the expected network slice that the UE expects to access based on the slice information and a current service requirement of the UE.

The slice information includes but is not limited to: Network Slice Selection Assistance Information (NSSAI), and/or Slice/Service Type (SST). NSSAI can be used to uniquely identify a network slice. SST may identify one or more network slices corresponding to a slices/service type.

In short, the slice information carried in the base station signaling indicates the network slice that the UE is able to access. The slice information may also be other identification information or the like that can indicate one or more network slices.

In an embodiment, the slice information indicates one or more network slices.

For example, if there are multiple network slices, the multiple network slices are configured with different slice priorities; or, if there are multiple network slices, slice priorities among the multiple network slices are determined by the UE based on a preset policy.

The expected network slice that the UE expects to access may be one or more of the network slices indicated by the slice information.

If the slice information indicates multiple network slices, the network side may indicate slice priorities of different network slices in the base station signaling or a signaling other than the base station signaling. That is, the network side configures different slice priorities for the multiple network slices indicated by the slice information, respectively. The slice priority is positively related to the frequency priority of the preferred frequency of the network slice. That is, the higher the slice priority of the network slice, the higher the frequency priority of the preferred frequency of the network slice.

In the embodiment of the disclosure, when the UE determines the slice priorities of multiple network slices for which the network side has not configured the slice priorities, the slice priorities are determined based on a preset policy.

For example, the preset policy includes: a local policy stored locally in the UE; and/or any policy received from the network side for determining the slice priority, for example, including but not limited to: the UE route selecting priority received from the network side.

In an embodiment, determining the frequency priority for the cell reselection based on the frequency information of the preferred frequency and the expected network slice that the UE expects to access includes:
determining frequency priorities among preferred frequencies of different network slices in performing the cell reselection based on the slice priorities and the frequency information of the preferred frequencies.

For an expected network slice, the preferred frequency has the highest frequency priority, and the non-preferred frequency has a frequency priority lower than that of the preferred frequency. The non-preferred frequency is any frequency other than the preferred frequency for the network slice.

For multiple expected network slices, there are multiple preferred frequencies of the network slices, and when determining the frequency priorities among these preferred frequencies, the frequency priorities are determined with reference to the slice priorities of these network slices.

For example, a frequency priority of a preferred frequency of a first slice priority is higher than a frequency priority of a preferred frequency of a second slice priority, in which the first slice priority is higher than the second slice priority. Here, the frequency priorities of the preferred frequencies of different network slices are positively correlated with the slice priorities of the corresponding network slices.

In some embodiments, the method includes:
in response to a conflict between a slice priority determined based on the local policy and a slice priority determined based on the UE route selecting policy, determining the slice priority of the network slice based on a conflict resolution mechanism.

When determining the slice priorities of network slices, one policy or multiple policies can be used simultaneously. If the slice priorities of the multiple network slices obtained by multiple policies are inconsistent, it indicates that the above-mentioned slice priority conflict occurs. In this case, the slice priorities among the multiple expected network slices are finally determined based on the conflict resolution mechanism.

For example, when the UE performs the cell reselection, it only pays attention to the frequency priorities of the preferred frequencies of the expected network slices that the UE expects to access, then when determining the slice priorities of the expected network slices that the UE expects to access, one policy or multiple policies are used simultaneously, if the slice priorities of the multiple network slices obtained by multiple policies are inconsistent, it is indicates that the above-mentioned slice priority conflict occurs. In this case, the slice priorities among the multiple expected network slices are finally determined based on the conflict resolution mechanism.

In an embodiment, the conflict resolution mechanism may include:
a policy priority; when resolving the slice priority conflict, the decision of the policy with the highest policy priority shall prevail;
   or
taking the low slice priority, that is, when a network slice has two or more slice priorities under different preset policies, the lowest slice priority shall prevail;
   or
taking the high slice priority, that is, when a network slice has two or more slice priorities under different preset policies, the highest slice priority shall prevail.

Of course, the above is an example of the conflict resolution mechanism, and the conflict mechanism can be various and not limited to any one of the above during specific implementation.

In an embodiment, the conflict resolution mechanism is sent along with the UE route selecting policy.

That is, the conflict resolution mechanism and the UE route selecting policy can be sent to the UE in a message; i.e., the UE receives the conflict resolution mechanism and the UE route selecting policy in one message.

In an embodiment, the conflict resolution mechanism is part of the UE route selecting policy. In another embodiment, the conflict resolution mechanism is not part of the UE route selecting policy.

In another embodiment, the conflict resolution mechanism may be any other conflict resolution mechanism pre-configured by the UE that is not part of the UE route selecting policy.

In an embodiment, the method further includes:
receiving a non-access stratum message carrying the UE route selecting policy.

In some embodiments, the UE route selecting policy may be sent by the network side, specifically, sent by the core network through a non-access stratum message. For example, the AMF of the core network sends a non-access stratum message to the UE in the RRC idle state/inactive state, and the non-access stratum message carries the UE route selecting policy.

In an embodiment, the method further includes:
in response to a non-access stratum of the UE determining that the expected network slice of the UE is changed, sending indication information of a changed expected network slice to an access stratum of the UE.

In the embodiment of the disclosure, the UE can decide the expected network slice to be accessed by itself. Therefore, if the non-access stratum of the UE determines that the expected network slice is changed, when the UE performs the cell reselection, it involves sorting frequency priority of the preferred frequency of the expected network slice, so the non-access stratum of the UE will automatically inform the access stratum, so that the access stratum does not need to receive the slice information of the expected network slice from the network side, thereby better realizing sorting of the frequency priorities for the cell reselection.

In some embodiments, the network slice indicated by the slice information includes:
a network slice that the network allows the UE to access; the network slice that the network allows the UE to access may be a network slice indicated by the allowed single-network slice selection assistance information (Allowed S-NSSAI(s)) in the slice information, or one or more of the network slices corresponding to SST in the slice information;
   and/or
a network slice that the network configures for the UE; the network slice configured by the network for the UE may be a network slice indicated by the allowed single-network slice selection assistance information (Allowed S-NSSAI(s)) in the slice information, or one or more of the network slices corresponding to SST in the slice information.

In some embodiments, the expected network slice of the UE is included at least in a network slice that the network allows the UE to access or a network slice that the network configures for the UE.

In another embodiment, the expected network slice that the UE expects to access may be selected by the UE from network slices other than the network slices indicated by the slice information according to its own service transmission requirement.

In some embodiments, the method further includes:
when the UE initiates a connection establishment request for a mobile origination (MO) call/ mobile termination (MT) call service, in response to a current frequency on which the UE resides being a non-preferred frequency of a network slice corresponding to the MO/MT call service, performing the cell reselection based on a preferred frequency of the network slice corresponding to the MO/MT call service; and
initiating the connection establishment request on a reselected cell.

In some embodiments, for a UE in a RRC idle state or a RRC inactive state, since the MO/MT call service triggers RRC connection establishment, the UE usually needs to request to establish a RRC connection that provides the MO call service or MT call service (i.e., MO/MT call service) with the network side through a connection establishment request.

In the embodiment of the disclosure, before the UE requests to establish the RRC connection with the network side, it determines whether the frequency (i.e., the current frequency) on which the UE currently resides is a frequency other than the preferred frequency of the network slice corresponding to the MO/MT call service. If no, the UE does not directly initiate a RRC connection request on the current frequency, but reselects the preferred frequency of the network slice to initiate the RRC connection request. In this way, the UE can automatically access the cell where the preferred frequency of the network slice corresponding to the MO/MT call service is located.

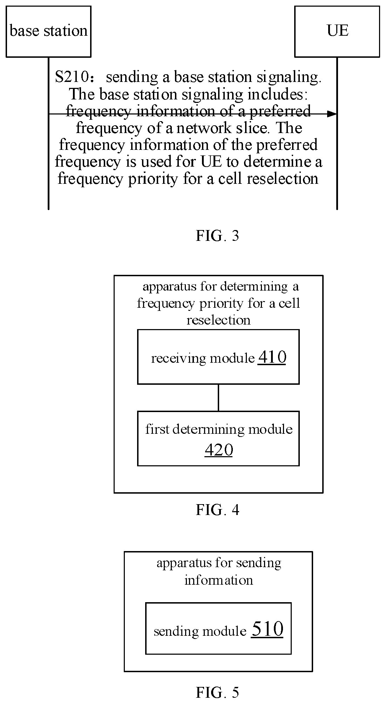

As illustrated in FIG. 3, the embodiment of the disclosure provides a method for sending information. The method is applied to a base station and includes the following.

At S210, a base station signaling is sent. The base station signaling includes: frequency information of a preferred frequency of a network slice. The frequency information of the preferred frequency is used for UE to determine a frequency priority for a cell reselection.

In the embodiment of the disclosure, the information processing method is applied in a base station. The base station sends the base station signaling to the UE.

For example, the broadcast signaling includes: a broadcast signaling; and/or a dedicated signaling.

The broadcast signaling may include but be not limited to various broadcast system messages.

The dedicated signaling may include but be not limited to various unicast signalings.

In the embodiment of the disclosure, the base station may carry the frequency information of the preferred frequency of the network slice that the UE is allowed to access or the UE is configured to access.

The frequency information may at least include: a frequency priority of the network slice a the frequency value of the preferred frequency.

The sending of the base station signaling may trigger the UE to consider the frequency priority of the preferred frequency of the network slice or preferentially consider the frequency priority of the preferred frequency of the network slice, when performing cell reselection.

In an embodiment, the dedicated signaling may carry the frequency information of the preferred frequency alone, or carry a dedicated priority alone.

In some embodiments, the dedicated signaling may carry both the preferred frequency and the dedicated priority, and in this case, the preferred frequency and the dedicated priority involved in the same dedicated signaling satisfy the following relationship: the dedicated priority is lower than the frequency priority of the preferred frequency.

In some embodiments, the broadcast signaling may carry the frequency information of the preferred frequency alone, or carry a common priority alone.

In another embodiment, the broadcast signaling may carry both the preferred frequency and the common priority. In this case, the preferred frequency and the dedicated priority involved in the same broadcast signaling satisfy the following relationship: the common priority is lower than the frequency priority of the preferred frequency.

In an embodiment, if the base station simultaneously sends the broadcast signaling and the dedicated signaling, the frequency priority in the dedicated signaling is generally higher than the frequency priority of the frequency involved in the broadcast signaling.

In an embodiment, the dedicated signaling further includes:
area information, configured to indicate an effective area where the frequency information of the preferred frequency and/or the dedicated priority included in the dedicated signaling is effective;
   and/or
timer information, which is configuration information of a configuration timer, and the configuration timer is at least used to determine an effectiveness period of the frequency information of the preferred frequency and/or the dedicated priority included in the dedicated signaling.

The area information may include: area identification, area coordinates or area boundary indication information.

The area information indicates the effective area where the one or more frequency information included in the dedicated signaling is effective. That is, if the UE is within the effective area indicated by the area information, the preferred frequency and/or the dedicated priority included in the dedicated frequency is effective. If the UE is outside the effective area indicated by the area information, the preferred frequency and/or the dedicated priority included in the dedicated signaling is ineffective. Ineffective frequency information and ineffective dedicated frequencies are not used for determining the frequency priority for the cell reselection. In the embodiment of the disclosure, the determination of the frequency priority for the cell reselection includes sorting of the frequency priorities.

In an embodiment, an effectiveness period may include a period of time during which one or more frequency information contained in the dedicated signaling is effective.

The timer information may include at least one of:
a timer identifier, used to indicate a preconfigured timer, for example, to identify a preconfigured T320, etc.;
timing duration information, indicating a timing duration of the configuration timer;
a timer running rule, indicating a rule of starting, terminating or suspending the configuration timer.

The effectiveness period corresponding to the configuration timer may be used for the preferred frequency and/or the dedicated frequency included in the dedicated signaling.

In some embodiments, the network slice indicated by the slice information includes: a network slice that the network allows the UE to access; and/or a network slice configured for the UE.

As illustrated in FIG. 4, the embodiment of the disclosure provides an apparatus for determining a frequency priority for a cell reselection. The apparatus is applied in user equipment (UE) and includes a receiving module 410 and a first determining module 420.

The receiving module 410 is configured to receive a base station signaling, in which the base station signaling includes: frequency information of a preferred frequency of a network slice.

The first determining module 420 is configured to determine the frequency priority for the cell reselection based on the frequency information of the preferred frequency.

In an embodiment, the first determining module 420 is configured to determine the frequency priority for the cell reselection based on the frequency information of the preferred frequency and an expected network slice that the UE expects to access.

In some embodiments, each of the receiving module 410 and the first determining module 420 may include a program module which may be executed by a processor to receive the base station signaling and determine the frequency priority for the cell reselection. Here, determining the frequency priority for the cell reselection at least includes determining one or more frequency priorities with the highest frequency priority or reaching a preset priority based on sorting of the frequency priorities.

In some embodiments, each of the receiving module 410 and the first determining module 420 may be a software and hardware combined module, which includes but is not limited to a programmable array, including but be not limited to a complex programmable array or a field programmable array.

In further embodiments, each of the receiving module 410 and the first determining module 420 may be a pure hardware module, which may include an application-specific integrated circuit.

In some embodiments, the base station signaling includes:
a broadcast signaling;
   and/or
a dedicated signaling.

In some embodiments, the first determining module 420 is configured to, in response to presence of a dedicated signaling including the frequency information of the preferred frequency, determine the frequency priority for the cell reselection based on the frequency information of the preferred frequency included in the dedicated signaling.

For example, the first determining module 420 is configured to, in response to presence of a dedicated signaling including the frequency information of the preferred frequency, determine the frequency priority for the cell reselection based on the frequency information of the preferred frequency included in the dedicated signaling and an expected network slice that the UE expects to access.

In some embodiments, the apparatus further includes:
a second determining module, configured to, in response to absence of a dedicated signaling including the frequency information of the preferred frequency and presence of a dedicated signaling including a dedicated priority, determine the frequency priority for the cell reselection based on the dedicated priority included in the dedicated signaling.

In some embodiments, in response to the dedicated signaling including the frequency information and a dedicated priority of the preferred frequency, the preferred frequency has a higher frequency priority than the dedicated priority.

In some embodiments, the dedicated signaling further includes:
area information, configured to indicate an effective area where the frequency information of the preferred frequency and/or the dedicated priority included in the dedicated signaling is effective;

In response to the UE being located in the effective area, the frequency information of the preferred frequency and/or the dedicated priority included in the dedicated signaling is used to determine the frequency priority for the cell reselection.

In some embodiments, the frequency information of the preferred frequency and/or the dedicated priority included in the dedicated signaling is effective within a running time of a configuration timer.

The dedicated signaling includes effective frequency information of the preferred frequency and/or an effective dedicated priority for determining the frequency priority for the cell reselection.

In some embodiments, the configuration timer has an action scope.

The frequency information of the preferred frequency and/or the dedicated priority included in the dedicated signaling is ineffective when the UE is out of the action scope.

In some embodiments, the first determining module 420 is configured to, in response to absence of a dedicated signaling and presence of a broadcast signaling including the frequency information of the preferred frequency, determine the frequency priority for the cell reselection based on the frequency information of the preferred frequency included in the broadcast signaling.

For example, the first determining module 420 is configured to, in response to absence of a dedicated signaling and presence of a broadcast signaling including the frequency information of the preferred frequency, determine the frequency priority for the cell reselection based on the frequency information of the preferred frequency included in the broadcast signaling and an expected network slice that the UE expects to access.

In some embodiments, the apparatus further includes:
a third determining module, configured to, in response to absence of a dedicated signaling and absence of a broadcast signaling including the frequency information of the preferred frequency, determine the frequency priority for the cell reselection based on a common priority included in the broadcast signaling.

In some embodiments, in response to the broadcast signaling including the frequency information of the preferred frequency and a common priority, the common priority is lower than the frequency priority of the preferred frequency.

In some embodiments, the network slice has one or more preferred frequencies.

In some embodiments, in response to one network slice having a plurality of preferred frequencies, different preferred frequencies are configured with different frequency priorities;
or
no frequency priority is configured among the preferred frequencies, and the frequency priorities among the preferred frequencies are determined by the UE.

In some embodiments, the base station signaling further includes: slice information; the slice information is configured to indicate one or more network slices.

In some embodiments, in response to the slice information indicating multiple network slices, the plurality of network slices are configured with different slice priorities;
or
in response to the slice information indicating multiple network slices, slice priorities among the plurality of network slices are determined by the UE based on a preset policy.

In some embodiments, the preset policy includes:
a local policy stored locally in the UE;
   and/or
a UE route selecting policy received from a network side.

In some embodiments, the first determining module 420 is configured to determine frequency priorities among preferred frequencies of different network slices in performing the cell reselection based on the slice priorities and the frequency information of the preferred frequencies.

In some embodiments, a frequency priority of a preferred frequency of a first slice priority is higher than a frequency priority of a preferred frequency of a second slice priority, in which the first slice priority is higher than the second slice priority.

In some embodiments, the apparatus further includes:
a fourth determining module, configured to determine the slice priority of the network slice based on a conflict resolution mechanism in response to a conflict between a slice priority determined based on the local policy and a slice priority determined based on the UE route selecting policy.

In some embodiments, the conflict resolution mechanism is sent along with the UE route selecting policy.

In some embodiments, the apparatus further includes:
a receiving module 410, configured to receive a non-access stratum message carrying the UE route selecting policy.

In some embodiments, the apparatus further includes:
an indicating module, configured to, in response to a non-access stratum of the UE determining that the expected network slice of the UE is changed, send indication information of a changed expected network slice to an access stratum of the UE.

In some embodiments, the network slice indicated by the slice information includes:
a network slice that a network allows the UE to access;
   and/or
a network slice that a network configures for the UE.

In some embodiments, the expected network slice of the UE is included at least in the network slice that the network allows the UE to access or the network slice that the network configures for the UE.

In some embodiments, the apparatus further includes:
a reselecting module, configured to, when the UE initiates a connection establishment request for a mobile origination (MO) call/ mobile termination (MT) call service, in response to a current frequency on which the UE resides being a non-preferred frequency of a network slice corresponding to the MO/MT call service, perform the cell reselection based on a preferred frequency of the network slice corresponding to the MO/MT call service; and
a connecting module, configured to initiate the connection establishment request on a reselected cell.

As illustrated in FIG. 5, the embodiment of the disclosure further provides an apparatus for sending information. The apparatus is applied in a base station and includes a sending module 510.

The sending module 510 is configured to send a base station signaling, in which the base station signaling includes: frequency information of a preferred frequency of a network slice; and the frequency information of the preferred frequency is used for the UE to determine a frequency priority for a cell reselection.

In some embodiments, the sending module 510 may be a program module which may be executed by a processor to send the base station signaling.

In some embodiments, the sending module 510 may be a software and hardware combined module, which includes but is not limited to a programmable array, including but be not limited to a complex programmable array or a field programmable array.

In some embodiments, the base station signaling includes:
a broadcast signaling;
   and/or
a dedicated signaling.

In some embodiments, the dedicated signaling further includes a dedicated priority, in which the dedicated priority is lower than the frequency priority of the preferred frequency.

In some embodiments, the broadcast signaling further includes a common frequency, in which the common priority is lower than the frequency priority of the preferred frequency.

In some embodiments, the dedicated signaling further includes:
area information, configured to indicate an effective area where the frequency information of the preferred frequency and/or the dedicated priority included in the dedicated signaling is effective;
   and/or
timer information, which is configuration information of a configuration timer, and the configuration timer is at least used to determine an effectiveness period of the frequency information of the preferred frequency and/or the dedicated priority included in the dedicated signaling.

In some embodiments, the base station signaling further includes: slice information; a network slice indicated by the slice information includes:
a network slice allowed by the network to be accessed;
   and/or,
a network slice configured for the UE.

The embodiment of the disclosure provides a method for determining a frequency priority for a cell reselection. When performing the cell reselection, the cell where the frequency with the highest frequency priority is preferentially selected.

When determining a sorting of the frequency priorities for the cell reselection, if different network slices have different preferred frequencies, for Ues supporting different network slices, the preferred frequencies of the network slices need to be considered when determining the frequency priorities, in order to preferentially reselect the cell corresponding to the preferred frequency of the network slice.

An effective area where the preferred frequency of the network slice and/or dedicated priority is effective is configured in the dedicated signaling. Or, a timer T320 acts on the preferred frequency of the network slice and/or dedicated priority in the dedicated signaling. When the UE in the idle state/inactive moves out of the current TA, the timer T320 is stopped.

The UE receives the network slice and its preferred frequency sent by the base station through a broadcast message or dedicated signaling, and determines the frequency priority for the cell reselection based on information of an expected network slice and the above-mentioned network slice and its preferred frequency.

The effective area where the preferred frequency of the network slice and/or dedicated priority is effective can be configured in the dedicated signaling. When the UE moves out of the effective area, the preferred frequency of the network slice and/or dedicated priority in the dedicated signaling is ineffective, and the UE determines the frequency priority for the cell reselection based on the preferred frequency of the network slice and/or common priority in the broadcast message.

In an embodiment, the effective area may be a tracking area list (TA list) or a cell list. The TA list includes information of one or more Tas. A TA includes one or more cells. The cell list includes cell information of one or more cells.

When limiting the dedicated priority in the original mechanism, it works together with the timer T320. When T320 is running and the UE is in the effective area, the frequency information carried in the dedicated signaling is effective, the frequency point indicated by the effective frequency information participates in the sorting of the frequency priorities, and the UE finally determines the reselected cell according to the sorted frequency priorities.

In an embodiment, the timer T320 can act on the preferred frequency of the network slice and/or the dedicated priority in the dedicated signaling. When the UE in the idle/inactive state moves out of the current TA, the timer T320 is stopped and the preferred frequency of the network slice and/or the dedicated priority in the dedicated signaling is ineffective, the UE determines the frequency priority for the cell reselection based on the preferred frequency of the network slice and/or the common priority in the broadcast system message.

The preferred frequencies of the network slice may be one or more frequencies.

If there are multiple preferred frequencies, the base station may provide a list of preferred frequencies. The frequency priorities among the frequencies depend on the UE. Further, a list of frequency priorities of preferred frequencies corresponding to a network slice may be provided.

For example:
option 1, network slice 1 has preferred frequencies F1 and F2; while network slice 2 has preferred frequencies F2 and F3;
option 2, network slice 1 has preferred frequencies F1 and F2, and F1 has a higher frequency priority than F2; while network slice 2 has preferred frequencies F2 and F3, and F2 has a higher frequency priority than F3.

It should be noted that there may be one or more network slices.

If the UE supports multiple network slices, the network slice priority may be determined by the network and sent to the UE through a broadcast system message or dedicated signaling, or may be determined by the UE.

In an embodiment, when the network slice priority is determined by the network, which indicates: slice1(F1>F2)>slice2(F2>F3) or slice1(F1 F2) > slice2(F2 F3).

For example, when the network slice priority is determined by the UE, the UE may determine it according to its own policy. Alternatively, the UE may determine an APP priority based on a priority of a URSP (UE route selecting policy) rule(s) sent by the AMF through a non-access stratum message, and determines the network slice priority of the expected network slice.

For another example, when the AMF sends the URSP rule(s) through a non-access stratum message, it may further indicate which way is preferentially used to determine the network slice priority of the expected network slice when network slice priority of the expected network slice determined by the UE according to its own policy and that determined according the URSP rule(s) conflict.

In some embodiments, the expected network slice is provided by the non-access stratum to the AS layer, and when the expected network slice information is updated, the UE non-access stratum provides the updated information to the access stratum, and may not trigger the access stratum to initiate a connection establishment or recovery process.

In an example, the frequency priority of the preferred frequency corresponding to the high-priority network slice is absolutely higher than the frequency priority of the preferred frequency corresponding to the low-priority network slice.

In another example, if the UE has the network slice and its preferred frequency sent by the base station through a broadcast system message but does not have the frequency information of the network slice and the frequency information of its preferred frequency sent through the dedicated signaling or the frequency information of the network slice and the frequency information of its preferred frequency sent through the dedicated signaling is ineffective, the frequency priority for the cell reselection is determined preferentially based on the slice information of the network slice and the frequency information of its preferred frequency in the system message.

The frequency priority of the preferred frequency of the expected network slice of the UE is higher than the frequency priorities of other non-preferred frequencies.

The non-preferred frequency is a frequency other than the preferred frequency of the network slice, and the non-preferred frequency includes any frequency other than the preferred frequency of the network slice.

The frequency priority of the non-preferred frequency may be determined according to the base station signaling, for example, according to the dedicated priority in the dedicated signaling, and/or according to the common priority in the system message.

In another embodiment, if the UE has effective slice information of the network slice and frequency information of its preferred frequency sent by the base station through a dedicated signaling, the slice information of the network slice and frequency information of its preferred frequency in the broadcast system message are ignored. Here, the broadcast system message is the broadcast signaling mentioned in the foregoing embodiments.

That is, if the UE has the slice information of the network slice and the frequency information of its preferred frequency sent through both a broadcast signaling and a dedicated signaling, the UE preferentially determines the frequency priority for the cell reselection based on the effective slice information of the network slice and frequency information of its preferred frequency in the dedicated signaling.

In an embodiment, the network slice is a network slice identified by an Allowed S-NSSAI or a Configured S-NSSAI or corresponding to an SST.

For example, the expected network slice may belong to a network slice identified by a Requested S-NSSAI or an Allowed S-NSSAI in the network slices identified by an Allowed S-NSSAI or a Configured S-NSSAI, or belong to a network slice corresponding to an SST.

In an embodiment, when the UE needs to initiate connection establishment for the MO/MT call service and the current residing frequency of the UE is a non-preferred frequency of the network slice corresponding to the MO/MT call service, the UE performs the cell reselection based on the preferred frequency of the network slice corresponding to the MO/MT call service, and if a suitable cell is found, the UE reselect the suitable cell for residency.

An embodiment of the disclosure further provides a communication device including a processor, a transceiver, a memory, and an executable program stored on the memory and capable of being run by the processor. When the processor executes the executable program, the method for determining a frequency priority for a cell reselection applied in the UE provided in any technical solution described above or the method for sending information applied in the base station provided in any technical solution described above is performed.

The communication device may be the UE or the base station described above.

The processor may include various kinds of storage medium. The storage medium may be a non-transitory computer storage medium, which may continually memory information stored thereon after the communication device is powered off. Here, the communication device may include a base station or UE.

The processor may be coupled to the memory via a bus, configured to read executable programs stored on the memory to implement the method as illustrated in FIG. 2 to FIG. 3.

The embodiment of the disclosure provides a computer storage medium. The computer storage medium stores with executable programs. The executable programs are executed by a processor, and the method provided in any technical solution of the first aspect or the second aspect can be implemented, for example at least one of the methods described with reference to FIG. 2 to FIG. 3.

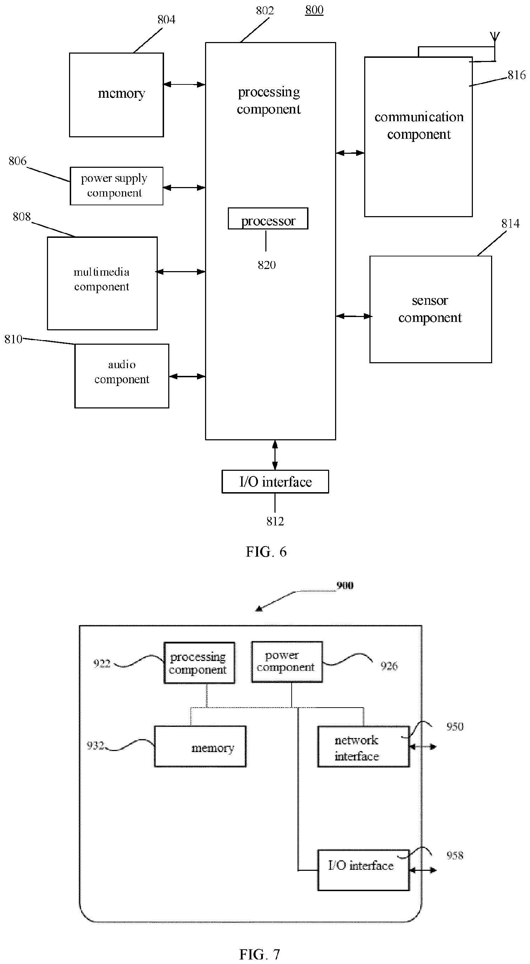

FIG. 6 is a block diagram of UE 800 according to an embodiment. For example, the UE 800 may be a smart phone, a computer, a digital broadcast terminal, a messaging device, a game console, a tablet device, a medical device, a fitness device, a personal digital assistant, and the like.

As illustrated in FIG. 6, the UE 800 may include one or more components: a processing component 802, a memory 804, a power supply component 806, a multimedia component 808, an audio component 810, an input/output (I/O) interface 812, a sensor component 814, and a communication component 816.

The processing component 802 generally controls the whole operation of the UE 800, such as the operations related to display, phone call, data communication, camera operation and recording operation. The processing component 802 may include one or more processors 820 to perform instructions, to complete all or part of steps of the above method. In addition, the processing component 802 may include one or more modules for the convenience of interaction between the processing component 802 and other components. For example, the processing component 802 may include a multimedia module for the convenience of interaction between the multimedia component 808 and the processing component 802.

The memory 804 is configured to store all types of data to support the operation of the UE 800. Examples of the data include the instructions of any applications or methods operated on the UE 800, contact data, phone book data, messages, pictures, videos, etc. The memory 804 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 may provide power for all components of the UE 800. The power supply component 806 may include power supply management system, one or more power supplies, and other units related to generating, managing and distributing power for the UE 800.

The multimedia component 808 includes a display screen of an output interface provided between the UE 800 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component 308 includes a front camera and/or a rear camera. When the UE 800 is in operation mode, such as shooting mode or video mode, the front camera or the rear camera may receive the external multimedia data. Each front camera and rear camera may be a fixed optical lens system or an optical lens system with a focal length and an optical zoom capacity.

The audio component 810 is configured as output and/or input signal. For example, the audio component 810 includes a microphone (MIC). When the UE 800 is in operation mode, such as call mode, record mode, and speech recognition mode, the microphone is configured to receive the external audio signals. The audio signals received may be further stored in the memory 804 or sent via the communication component 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The buttons may include but not limited to a home button, a volume button, a start button and a lock button.

The sensor component 814 includes one or more sensors, configured to provide various aspects of status assessment for the UE 800. For example, the sensor component 814 may detect the on/off state of the UE 800 and the relative positioning of the component. For example, the component is a display and a keypad of the UE 800. The sensor component 814 may further detect the location change of the UE 800 or one component of the UE 800, the presence or absence of contact between the user and the UE 800, the orientation or acceleration/deceleration of the UE 800, and the temperature change of the UE 800. The sensor component 814 may include a proximity sensor, which is configured to detect the existence of the objects nearby without any physical contact. The sensor component 814 may further include a light sensor such as CMOS or CCD image sensor, which is configured to use in imaging applications. In some embodiments, the sensor component 814 may further include an acceleration transducer, a gyroscope sensor, a magnetic sensor, a pressure sensor or a temperature sensor.

The communication component 816 is configured for the convenience of wire or wireless communication between the UE 800 and other devices. The a UE 800 may access wireless networks based on a communication standard, such as Wi-Fi, 2G, or 3G, or their combination. In an exemplary embodiment, the communication component 816 receives broadcast signals or broadcast-related information from an external broadcast management system via a broadcast channel. In an exemplary embodiment, the communication component 816 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an embodiment, the UE 800 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above.

In an exemplary embodiment, a non-transitory computer-readable storage medium is further provided which includes instructions, such as the memory 804 including instructions, in which the instructions may be executed by the processor 820 of the UE 800 to complete the above method. For example, the non-transitory computer-readable storage medium may be a ROM, a random access memory (RAM), a CD-ROM, a magnetic tape, a floppy disk, an optical data storage device, etc.

As illustrated in FIG. 7, an embodiment of the disclosure provides a block diagram of a base station 900 according to an embodiment. For example, the base station 900 may be provided as a network side device. As illustrated in FIG. 7, the base station 900 includes a processing component 922, which includes one or more processors, and a memory resource represented by a memory 932 for storing instructions executable by the processing component 922, such as application programs. The application program stored in the memory 932 may include one or more modules, each module corresponds to a set of instructions. In addition, the processing component 922 is configured to execute instructions to perform the method described above and applied to the base station, for example the methods illustrated in FIG. 2 to FIG. 3.

The base station 900 may also include a power component 926 configured to perform power management of the base station 900, a wired or wireless network interface 950 configured to connect the base station 900 to the network, and an I/O interface 958. The base station 900 may operate based on an operating system stored on the memory 932, such as Windows Server TM, Mac OS XTM, UnixTM, LinuxTM, FreeBSDTM or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining a frequency priority for a cell reselection, applied to user equipment (UE), comprising:
receiving a base station signaling, wherein the base station signaling comprises: frequency information of a preferred frequency of a network slice; and
determining the frequency priority for the cell reselection based on the frequency information of the preferred frequency.

2. The method according to claim 1, wherein the base station signaling comprises:
a broadcast signaling;
and/or
a dedicated signaling.

3. The method according to claim 2, wherein determining the frequency priority for the cell reselection based on the frequency information of the preferred frequency comprises:
in response to presence of a dedicated signaling comprising the frequency information of the preferred frequency, determining the frequency priority for the cell reselection based on the frequency information of the preferred frequency comprised in the dedicated signaling.

4. The method according to claim 2, further comprising:
in response to absence of a dedicated signaling comprising the frequency information of the preferred frequency and presence of a dedicated signaling comprising a dedicated priority, determining the frequency priority for the cell reselection based on the dedicated priority comprised in the dedicated signaling.

5. The method according to claim 2 or 3, wherein in response to the dedicated signaling comprising the frequency information and a dedicated priority of the preferred frequency, a frequency priority of the preferred frequency is higher than the dedicated priority.

6. The method according to claim 3 or 4, wherein the dedicated signaling further comprises:
area information, configured to indicate an effective area where the frequency information of the preferred frequency and/or a dedicated priority comprised in the dedicated signaling is effective;
wherein, in response to the UE being located in the effective area, the frequency information of the preferred frequency and/or the dedicated priority comprised in the dedicated signaling is used to determine the frequency priority for the cell reselection.

7. The method according to any one of claims 3 to 6, wherein the frequency information of the preferred frequency and/or the dedicated priority comprised in the dedicated signaling is effective within a running time of a configuration timer;
the dedicated signaling comprises effective frequency information of the preferred frequency and/or an effective dedicated priority for determining the frequency priority for the cell reselection.

8. The method according to claim 7, wherein the configuration timer has an action scope;
the frequency information of the preferred frequency and/or the dedicated priority comprised in the dedicated signaling is ineffective when the UE is out of the action scope.

9. The method according to any one of claims 2 to 8, wherein determining the frequency priority for the cell reselection based on the frequency information of the preferred frequency comprises:
in response to absence of a dedicated signaling and presence of a broadcast signaling comprising the frequency information of the preferred frequency, determining the frequency priority for the cell reselection based on the frequency information of the preferred frequency comprised in the broadcast signaling.

10. The method according to claim 9, further comprising:
in response to absence of a dedicated signaling and absence of a broadcast signaling comprising the frequency information of the preferred frequency, determining the frequency priority for the cell reselection based on a common priority comprised in the broadcast signaling.

11. The method of claim 2, wherein in response to the broadcast signaling comprising the frequency information of the preferred frequency and a common priority, the common priority is lower than a frequency priority of the preferred frequency.

12. The method according to any one of claims 1 to 10, wherein determining the frequency priority for the cell reselection based on the frequency information of the preferred frequency comprises:
determining the frequency priority for the cell reselection based on the frequency information of the preferred frequency and an expected network slice that the UE expects to access.

13. The method according to any one of claims 1 to 12, wherein the network slice has one or more preferred frequencies.

14. The method of claim 13, wherein,
in response to one network slice having a plurality of preferred frequencies, different preferred frequencies are configured with different frequency priorities;
or,
no frequency priority is configured among the preferred frequencies, and the frequency priorities among the preferred frequencies are determined by the UE.

15. The method according to any one of claims 1 to 14, wherein the base station signaling further comprises: slice information; the slice information is configured to indicate one or more network slices.

16. The method of claim 15, wherein,
in response to the slice information indicating a plurality of network slices, the plurality of network slices are configured with different slice priorities;
or,
in response to the slice information indicating a plurality of network slices, slice prioritie s among the plurality of network slices are determined by the UE based on a preset policy.

17. The method according to claim 16, wherein the preset strategy comprises:
a local policy stored locally in the UE;
and/or
a UE route selecting policy received from a network side.

18. The method according to claim 17, wherein determining the frequency priority for the cell reselection based on the frequency information of the preferred frequency comprises:
determining frequency priorities among preferred frequencies of different network slices in performing the cell reselection based on the slice priorities and the frequency information of the preferred frequencies.

19. The method according to claim 18, wherein a frequency priority of a preferred frequency of a first slice priority is higher than a frequency priority of a preferred frequency of a second slice priority, wherein the first slice priority is higher than the second slice priority.

20. The method according to claim 17, comprising:
in response to a conflict between a slice priority determined based on the local policy and a slice priority determined based on the UE route selecting policy, determining the slice priority of the network slice based on a conflict resolution mechanism.

21. The method according to claim 20, wherein the conflict resolution mechanism is sent along with the UE route selecting policy.

22. The method according to any one of claims 16 to 21, further comprising:
receiving a non-access stratum message carrying the UE route selecting policy.

23. The method according to claim 12, further comprising:
in response to a non-access stratum of the UE determining that the expected network slice of the UE is changed, sending indication information of a changed expected network slice to an access stratum of the UE.

24. The method according to any one of claims 15 to 23, wherein the network slice indicated by the slice information comprises:
a network slice that a network allows the UE to access;
and/or
a network slice that a network configures for the UE.

25. The method according to claim 24, wherein the expected network slice of the UE is comprised at least in the network slice that the network allows the UE to access or the network slice that the network configures for the UE.

26. The method according to any one of claims 1 to 25, further comprising:
when the UE initiates a connection establishment request for a mobile origination (MO) call/ mobile termination (MT) call service, in response to a current frequency on which the UE resides being a non-preferred frequency of a network slice corresponding to the MO/MT call service, performing the cell reselection based on a preferred frequency of the network slice corresponding to the MO/MT call service; and
initiating the connection establishment request on a reselected cell.

27. A method for sending information, applied to a base station, comprising:
sending a base station signaling, wherein the base station signaling comprises: frequency information of a preferred frequency of a network slice; and the frequency information of the preferred frequency is used for a user equipment (UE) to determine a frequency priority for a cell reselection.

28. The method according to claim 27, wherein the base station signaling comprises:
a broadcast signaling;
and/or
a dedicated signaling.

29. The method according to claim 28, whereinthe dedicated signaling further comprises a dedicated priority, wherein the dedicated priority is lower than a frequency priority of the preferred frequency.

30. The method according to claim 29, wherein the broadcast signaling further comprises a common frequency, wherein the common priority is lower than a frequency priority of the preferred frequency.

31. The method according to claim 28 or 29, wherein the dedicated signaling further comprises:
area information, configured to indicate an effective area where the frequency information of the preferred frequency and/or a dedicated priority comprised in the dedicated signaling is effective;
and/or
timer information, which is configuration information of a configuration timer, and the configuration timer is at least used to determine an effectiveness period of the frequency information of the preferred frequency and/or the dedicated priority comprised in the dedicated signaling.

32. The method according to claim 27, wherein the base station signaling further comprises: slice information;
a network slice indicated by the slice information comprises:
a network slice allowed by the network to be accessed;
and/or,
a network slice configured for the UE.

33. An apparatus for determining a frequency priority for a cell reselection, applied to user equipment (UE), comprising:
a receiving module, configured to receive a base station signaling, wherein the base station signaling comprises: frequency information of a preferred frequency of a network slice; and
a first determining module, configured to determine the frequency priority for the cell reselection based on the frequency information of the preferred frequency.

34. The apparatus according to claim 33, wherein the base station signaling comprises:
a broadcast signaling;
and/or
a dedicated signaling.

35. The apparatus according to claim 34, wherein the first determining module is configured to, in response to presence of a dedicated signaling comprising the frequency information of the preferred frequency, determine the frequency priority for the cell reselection based on the frequency information of the preferred frequency comprised in the dedicated signaling.

36. The apparatus according to claim 34, further comprising:
a second determining module, configured to, in response to absence of a dedicated signaling comprising the frequency information of the preferred frequency and presence of a dedicated signaling comprising a dedicated priority, determine the frequency priority for the cell reselection based on the dedicated priority comprised in the dedicated signaling.

37. The apparatus according to claim 34 or 35, wherein in response to the dedicated signaling comprising the frequency information and a dedicated priority of the preferred frequency, the preferred frequency has a higher frequency priority than the dedicated priority.

38. The apparatus according to claim 35 or 36, wherein the dedicated signaling further comprises:
area information, configured to indicate an effective area where the frequency information of the preferred frequency and/or the dedicated priority comprised in the dedicated signaling is effective;
wherein, in response to the UE being located in the effective area, the frequency information of the preferred frequency and/or the dedicated priority comprised in the dedicated signaling is used to determine the frequency priority for the cell reselection.

39. The apparatus according to any one of claims 35 to 38, wherein the frequency information of the preferred frequency and/or the dedicated priority comprised in the dedicated signaling is effective within a running time of a configuration timer;
the dedicated signaling comprises effective frequency information of the preferred frequency and/or an effective dedicated priority for determining the frequency priority for the cell reselection.

40. The apparatus according to claim 39, wherein the configuration timer has an action scope;
the frequency information of the preferred frequency and/or the dedicated priority comprised in the dedicated signaling is ineffective when the UE is out of the action scope.

41. The apparatus according to any one of claims 34 to 40, wherein the first determining module is configured to, in response to absence of a dedicated signaling and presence of a broadcast signaling comprising the frequency information of the preferred frequency, determine the frequency priority for the cell reselection based on the frequency information of the preferred frequency comprised in the broadcast signaling.

42. The apparatus according to claim 41, wherein the apparatus further comprises:
a third determining module, configured to, in response to absence of a dedicated signaling and absence of a broadcast signaling comprising the frequency information of the preferred frequency, determine the frequency priority for the cell reselection based on a common priority comprised in the broadcast signaling.

43. The apparatus according to claim 35, wherein in response to the broadcast signaling comprising the frequency information of the preferred frequency and a common priority, the common priority is lower than the frequency priority of the preferred frequency.

44. The method according to any one of claims 27 to 43, wherein the first determining module is configured to determine the frequency priority for the cell reselection based on the frequency information of the preferred frequency and an expected network slice that the UE expects to access.

45. The apparatus according to any one of claims 33 to 44, wherein the network slice has one or more preferred frequencies.

46. The apparatus according to claim 45, wherein,
in response to one network slice having a plurality of preferred frequencies, different preferred frequencies are configured with different frequency priorities;
or,
no frequency priority is configured among the preferred frequencies, and the frequency priorities among the preferred frequencies are determined by the UE.

47. The apparatus according to any one of claims 33 to 46, wherein the base station signaling further comprises: slice information; the slice information is configured to indicate one or more network slices.

48. The apparatus according to claim 47, wherein,
in response to the slice information indicating a plurality of network slices, the plurality of network slices are configured with different slice priorities;
or,
in response to the slice information indicating a plurality of network slices, slice priorities among the plurality of network slices are determined by the UE based on a preset policy.

49. The apparatus according to claim 48, wherein the preset policy comprises:
a local policy stored locally in the UE;
and/or
a UE route selecting policy received from a network side.

50. The apparatus according to claim 49, wherein the first determining module is configured to determine frequency priorities among preferred frequencies of different network slices in performing the cell reselection based on the slice priorities and the frequency information of the preferred frequencies.

51. The apparatus according to claim 50, wherein a frequency priority of a preferred frequency of a first slice priority is higher than a frequency priority of a preferred frequency of a second slice priority, wherein the first slice priority is higher than the second slice priority.

52. The apparatus according to claim 49, comprising:
a fourth determining module, configured to determine the slice priority of the network slice based on a conflict resolution mechanism in response to a conflict between a slice priority determined based on the local policy and a slice priority determined based on the UE route selecting policy.

53. The apparatus according to claim 52, wherein the conflict resolution mechanism is sent along with the UE route selecting policy.

54. The apparatus according to any one of claims 48 to 53, further comprising:
a receiving module, configured to receive a non-access stratum message carrying the UE route selecting policy.

55. The apparatus according to claim 44, further comprising:
an indicating module, configured to, in response to a non-access stratum of the UE determining that the expected network slice of the UE is changed, send indication information of a changed expected network slice to an access stratum of the UE.

56. The apparatus according to any one of claims 47 to 55, wherein the base station signaling further comprises: slice information; the network slice indicated by the slice information comprises:
a network slice that a network allows the UE to access;
and/or
a network slice that a network configures for the UE.

57. The apparatus according to claim 56, wherein the expected network slice of the UE is comprised at least in the network slice that the network allows the UE to access or the network slice that the network configures for the UE.

58. The apparatus according to any one of claims 33 to 57, further comprising:
a reselecting module, configured to, when the UE initiates a connection establishment request for a mobile origination (MO) call/ mobile termination (MT) call service, in response to a current frequency on which the UE resides being a non-preferred frequency of a network slice corresponding to the MO/MT call service, perform the cell reselection based on a preferred frequency of the network slice corresponding to the MO/MT call service; and
a connecting module, configured to initiate the connection establishment request on a reselected cell.

59. An apparatus for sending information, applied to a base station, comprising:
a sending module, configured to send a base station signaling, wherein the base station signaling comprises: frequency information of a preferred frequency of a network slice; and the frequency information of the preferred frequency is used for the UE to determine a frequency priority for a cell reselection.

60. The apparatus according to claim 59, wherein the base station signaling comprises:
a broadcast signaling;
and/or
a dedicated signaling.

61. The apparatus according to claim 60, wherein the dedicated signaling further comprises a dedicated priority, wherein the dedicated priority is lower than the frequency priority of the preferred frequency.

62. The apparatus according to claim 60, wherein the broadcast signaling further comprises a common frequency, wherein the common priority is lower than the frequency priority of the preferred frequency.

63. The apparatus according to claim 60 or 61, wherein the dedicated signaling further comprises:
area information, configured to indicate an effective area where the frequency information of the preferred frequency and/or the dedicated priority comprised in the dedicated signaling is effective;
and/or
timer information, which is configuration information of a configuration timer, and the configuration timer is at least used to determine an effectiveness period of the frequency information of the preferred frequency and/or the dedicated priority comprised in the dedicated signaling.

64. The apparatus according to claim 59, wherein the base station signaling further comprises: slice information; a network slice indicated by the slice information comprises:
a network slice allowed by the network to be accessed;
and/or,
a network slice configured for the UE.

65. A communication device, comprising a processor, a transceiver, a memory, and an executable program stored on the memory and capable of being run by the processor, wherein when the processor executes the executable program, the method according to any of claims 1 to 26 or 27 to 32 is performed.

66. A computer storage medium storing an executable program; wherein after the executable program is executed by a processor, the method according to any of claims 1 to 26 or 27 to 32 is performed.
